# EUROPEAN PATENT APPLICATION

(11) **EP 4 592 199 A1**
(43) Date of publication of application: **30.07.2025**
(21) Application number: 22959115.1
(22) Date of filing: 21.09.2022
(51) Int. Cl.: B64D 47/08

(54) **CONTROL METHOD, GIMBAL, AND GIMBAL SYSTEM**

(71) Applicant: SZ DJI Technology Co., Ltd., Shenzhen, Guangdong 518057 (CN)
(72) Inventor: CHEN, Jiayong, Shenzhen, Guangdong 518057 (CN); ZENG, Dehao, Shenzhen, Guangdong 518057 (CN); CHEN, Xin, Shenzhen, Guangdong 518057 (CN); LUO, Peiyan, Shenzhen, Guangdong 518057 (CN); WU, Jinyuan, Shenzhen, Guangdong 518057 (CN); CHEN, Chuanwei, Shenzhen, Guangdong 518057 (CN); CHEN, Xi, Shenzhen, Guangdong 518057 (CN); XIE, Wenlin, Shenzhen, Guangdong 518057 (CN)
(74) Representative: Appelt, Christian W.
(86) International application number: PCT/CN2022/120373
(87) International publication number: WO 2024/060105

(57) **Abstract**

The present disclosure provides a control method for a gimbal. The gimbal includes an arm assembly. The arm assembly is configured to carry a load device. The arm assembly includes at least one arm and a motor that controls the arm to rotate. The control method includes, in response to the gimbal being in an unloaded mode, controlling at least one motor to cause the arm assembly to be in a first attitude, and in response to a push-pull operation on the arm assembly, controlling at least one motor to maintain the arm assembly in the current attitude when the push-pull operation is removed from the arm assembly. The arm assembly can maintain the current attitude. In the technical solution of embodiments of the present disclosure, by controlling the motor of the gimbal in the unloaded mode, the operation complexity of the gimbal can be reduced, and the user experience can be further improved.

## Description

### TECHNICAL FIELD

The present disclosure generally relates to the gimbal technology field and, more particularly, to a gimbal control method, a gimbal system control method, a gimbal, and a gimbal system.

### BACKGROUND

A gimbal usually needs to be combined with a load device to complete a shooting task. Common load devices include mobile phones, cameras, and camcorders. Taking a mobile phone as an example, during a shooting process using the gimbal, a user needs to go through cumbersome adjustments to combine the mobile phone with the gimbal and cause the mobile phone and the gimbal to be in a ready-for-shooting state. Thus, preparation time is increased for the shooting task, which leads to a poor user experience.

### SUMMARY

Embodiments of the present disclosure provide a gimbal control method, a gimbal system control method, a gimbal, and a gimbal system, which can be used to reduce cumbersome adjustment operations and improve the user application experience.

A first aspect of the present disclosure provides a gimbal control method. The gimbal includes an arm assembly. The arm assembly is configured to carry a load device. The arm assembly includes at least one arm and a motor that controls rotation of the arm. The control method includes in response to the gimbal being in an unloaded mode, controlling at least one motor to cause the arm assembly to be in a first attitude, and in response to a push-pull operation on the arm assembly, controlling at least one motor to maintain the arm assembly in the current attitude when the push-pull operation is removed from the arm assembly. The current attitude refers to an attitude of the arm assembly when the push-pull operation is removed from the arm assembly.

The first aspect of the present disclosure provides another gimbal control method. The gimbal includes the arm assembly. The arm assembly is configured to carry a load device. The arm assembly includes at least one arm and a motor that controls rotation of the arm. The control method includes in response to the load device being mounted to the arm assembly, controlling the gimbal to perform a first broadcast, such that the load device outputs prompt information or directly displays an interface of an application when the load device establishes a first communication connection with the gimbal based on broadcast information corresponding to the first broadcast. The application is installed on the load device and is used to obtain a user instruction for controlling the gimbal, and the prompt information is used to prompt the user whether to open the interface of the application.

The first aspect of the present disclosure provides another gimbal control method. The gimbal includes the arm assembly. The arm assembly is configured to carry a load device. The arm assembly includes at least one arm and a motor that controls the rotation of the arm. The control method includes in a case where the arm assembly is mounted with the load device, in response to a calibration instruction input by a user, obtaining load attitude information of the load device, controlling the gimbal to perform a first calibration according to the load attitude information. The load attitude information is detected by a sensor arranged at the load device.

The first aspect of the present disclosure provides another gimbal control method. The gimbal includes the arm assembly. The arm assembly is configured to carry a load device. The arm assembly includes at least one arm and a motor that controls the rotation of the arm. The control method includes in a case where the arm assembly is mounted with the load device, controlling the gimbal to send attitude information of the arm assembly to the load device to cause the load device to adjust the direction of the display interface of the load device according to the attitude information of the arm assembly.

A second aspect of the present disclosure provides a gimbal system control method. The gimbal system includes a gimbal and a load device. The gimbal includes an arm assembly. The arm assembly is configured to carry the load device. The arm assembly includes at least one arm and a motor for controlling rotation of the arm. The method includes in response to the gimbal being in an unloaded mode, controlling at least one motor to cause the arm assembly to be in the first attitude, and in response to the push-pull operation on the arm assembly, controlling at least one motor to cause the arm assembly to maintain the current attitude when the push-pull operation is removed from the arm assembly. The current attitude refers to the attitude of the arm assembly when the push-pull operation is removed from the arm assembly.

The second aspect of the present disclosure provides another gimbal system control method. The gimbal system includes a gimbal and a load device. The gimbal includes an arm assembly. The arm assembly is configured to carry the load device. The arm assembly includes at least one arm and a motor for controlling rotation of the arm. The method includes, in response to the load device being mounted to the arm assembly, controlling the gimbal to perform a first broadcast, such that the load device outputs prompt information or directly displays an interface of an application when the load device establishes a first communication connection with the gimbal based on broadcast information corresponding to the first broadcast. The application is installed on the load device and is used to obtain a user instruction for controlling the gimbal. The prompt information is used to prompt the user whether to open the interface of the application.

The second aspect of the present disclosure provides another gimbal system control method. The gimbal system includes a gimbal and a load device. The gimbal includes an arm assembly. The arm assembly is configured to carry the load device. The arm assembly includes at least one arm and a motor for controlling rotation of the arm. The method includes in a case where the arm assembly is mounted with the load device, in response to a calibration instruction input by a user, controlling the load device to send load attitude information of the load device to the gimbal, the load attitude information being detected by a sensor arranged at the load device, and controlling the gimbal to receive the load attitude information and to perform a first calibration according to the load attitude information.

The second aspect of the present disclosure provides another gimbal system control method. The gimbal system includes a gimbal and a load device. The gimbal includes an arm assembly. The arm assembly is configured to carry the load device. The arm assembly includes at least one arm and a motor for controlling rotation of the arm. The method includes in a case where the arm assembly is mounted with the load device, controlling the gimbal to send attitude information of the arm assembly to the load device, controlling the load device to receive the attitude information of the arm assembly, and controlling the load device to adjust a display interface direction of the load device according to the attitude information of the arm assembly.

A third aspect of the present disclosure provides a gimbal. The gimbal includes an arm assembly, the arm assembly being configured to carry a load device, the arm assembly including at least one arm and a motor that controls rotation of the arm, a support assembly, the support assembly being configured to support the arm assembly, a memory, the memory being used to store a computer program, and a processor, the processor being configured to run the computer program stored in the memory to perform the gimbal control method of the first aspect of the present disclosure.

A fourth aspect of the present disclosure provides a gimbal system. The gimbal system includes a gimbal, the gimbal including an arm assembly and a support assembly, the arm assembly including at least one arm and a motor that controls rotation of the motor, the support assembly being configured to support the arm assembly, a load device, the load device being carried by the arm assembly, a memory, the memory being used to store a computer program, and a processor, the processor being configured to run the computer program stored in the memory to execute the gimbal system control method recorded in the second aspect of the present disclosure.

In the technical solution of embodiments of the present disclosure, the free rotation of the arm assembly in the unloaded mode can be avoided by controlling the motor of the gimbal in the unloaded mode, which facilitates the user to mount the load device onto the unloaded gimbal in the first attitude, or the load device can be mounted when the gimbal attitude is pushed/pulled to a specific attitude according to the practical needs. Thus, the complexity degree of the operation of the gimbal can be reduced, and the user application experience can be further improved.

Additional aspects and advantages of embodiments of the present disclosure are described below. Some aspects and advantages can become obvious from the description below or some aspects and advantages can be known through the implementation of embodiments of the present disclosure.

### BRIEF DESCRIPTION OF THE DRAWINGS

The accompanying drawings described here are provided to further understand the present disclosure and constitute a part of the present disclosure. The illustrative embodiments and the description of the illustrative embodiments are used to explain the present disclosure and do not limit the present disclosure.
FIG. 1 is a schematic diagram of a gimbal in related art.
FIG. 2 is a schematic flowchart of a gimbal control method according to some embodiments of the present disclosure.
FIG. 3 is a schematic flowchart of another gimbal control method according to some embodiments of the present disclosure.
FIG. 4 is a schematic flowchart of another gimbal control method according to some embodiments of the present disclosure.
FIG. 5 is a schematic flowchart of another gimbal control method according to some embodiments of the present disclosure.
FIG. 6 is a schematic flowchart of another gimbal control method according to some embodiments of the present disclosure.
FIG. 7 is a schematic flowchart of another gimbal control method according to some embodiments of the present disclosure.
FIG. 8 is a schematic flowchart of another gimbal control method according to some embodiments of the present disclosure.
FIG. 9 is a schematic flowchart of another gimbal control method according to some embodiments of the present disclosure.
FIG. 10 is a schematic flowchart of another gimbal control method according to some embodiments of the present disclosure.
FIG. 11 is a schematic flowchart of a gimbal system control method according to some embodiments of the present disclosure.
FIG. 12 is a schematic flowchart of another gimbal system control method according to some embodiments of the present disclosure.
FIG. 13 is a schematic flowchart of another gimbal system control method according to some embodiments of the present disclosure.
FIG. 14 is a schematic flowchart of another gimbal system control method according to some embodiments of the present disclosure.

### DETAILED DESCRIPTION OF THE EMBODIMENTS

To make the objectives, technical solutions, and advantages of embodiments of the present disclosure clearer, the technical solutions of embodiments of the present disclosure are described clearly and completely below in conjunction with the accompanying drawings of embodiments of the present disclosure. Obviously, the described embodiments are some embodiments of the present disclosure, not all the embodiments. Based on embodiments of the present disclosure, all other embodiments obtained by those skilled in the art without creative efforts shall fall within the scope of the present disclosure.

Unless otherwise defined, all technical and scientific terms used herein have the same meanings as commonly understood by those skilled in the art. The terms used in the description of the present disclosure are only for the purpose of describing specific embodiments and are not intended to limit the present disclosure.

Embodiments of the present disclosure are described in detail below, and the exemplary embodiments are shown in the accompanying drawings. The same or similar reference numerals represent the same or similar elements or elements having the same or similar functions. Embodiments described below with reference to the accompanying drawings are exemplary and are only for explaining the present disclosure, and should not be construed as limiting the present disclosure.

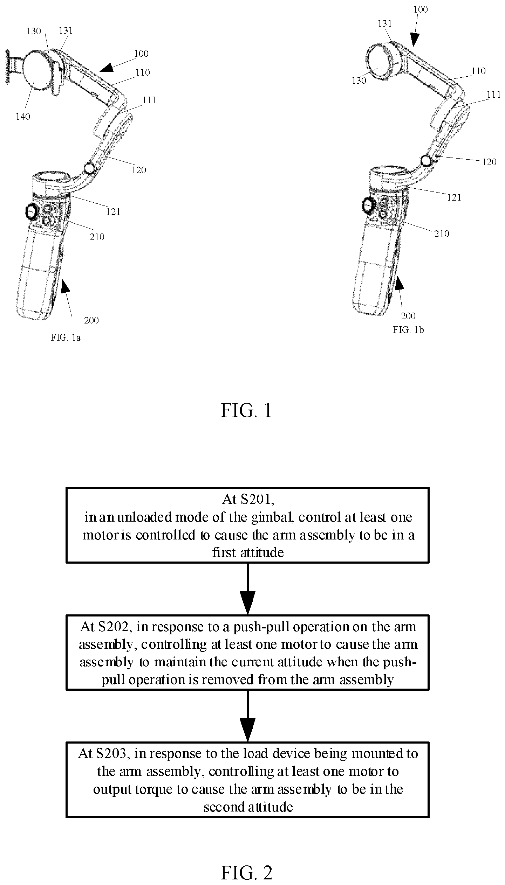

FIG. 1 is a schematic diagram of a gimbal in the related technology. Referring to FIG. 1a and FIG. 1b, the gimbal includes an arm assembly 100 and a support assembly 200. The arm assembly 100 is configured to mount and stabilize a load device. The arm assembly 100 includes at least one arm (110, 120, and 130) and motor (111, 121, and 131) controlling the rotation of the arm. In some related technologies, the arm assembly can include any one of a single arm and a single motor, dual arms and dual motors, or three arms and three motors. As shown in FIG. 1, the arm assembly includes three arms (roll arm 130, pitch arm 110, and yaw arm 120) and motors that drive the three arms to rotate. A load mounting member 140 is mounted on the roll arm 130. The support assembly is configured to provide support for the arm assembly and includes an operation area 210 for receiving user instructions. The arm assembly is connected to the support assembly via a motor.

Usually, when the arm assembly of the gimbal is not mounted with a load device, the motors connected to the arms do not output torque. Thus, the arms of the gimbal can rotate freely relative to the support assembly and/or between the arms. Therefore, when the user mounts the load device onto the arm assembly, the user needs to hold the arm assembly to prevent the arm assembly from rotating freely. The operation can be cumbersome and time-consuming.

To solve the technical problem, the present disclosure provides a gimbal control method to facilitate the user to easily mount the load device onto the arm assembly.

In some embodiments, FIG. 2 is a schematic flowchart of a gimbal control method according to some embodiments of the present disclosure.

Referring to FIG. 2, embodiments of the present disclosure provide the gimbal control method. The gimbal can include the arm assembly. The arm assembly can be configured to carry the load device and include at least one arm and a motor controlling the rotation of the arm.

In some embodiments, the arm assembly can include three arms, such as a yaw arm, a pitch arm, and a roll arm. A yaw motor, a pitch motor, and a roll motor corresponding to the arms can be provided, respectively. The yaw motor can be arranged at the connection between the support assembly and the yaw arm. The pitch motor can be arranged at the connection between the yaw arm and the pitch arm. The roll motor can be arranged at the connection between the pitch arm and the roll arm. The load device can be any electronic device with a shooting function, such as a mobile phone, a camera, or a camcorder. In some embodiments, the load device can be a mobile phone.

In some embodiments, the gimbal control method can include the following processes.

At S201, in an unloaded mode of the gimbal, at least one motor is controlled to cause the arm assembly to be in a first attitude.

It is easy to understand that in the unloaded mode, the arm assembly may not carry a load device. In some methods, the gimbal can automatically recognize whether the gimbal is in the unloaded mode. In some embodiments, a detection apparatus can be provided to detect whether a load device is mounted on the arm assembly. For example, the detection apparatus can be arranged at the arm assembly to detect the mounting situation of the load device. The detection apparatus can include an infrared sensor, a micro switch, or a Hall sensor. In some other embodiments, whether the load device is mounted on the arm assembly can be detected by a drive motor. In some embodiments, any one arm motor can be controlled to output torque. The torque can be equal to the minimum torque that can cause the arm to rotate, and the rotation situation of the arm can be recorded. If the arm rotates, the gimbal can be determined to be in the state without mounting the load device.

The first attitude can be the attitude of the arm assembly set by the user for the gimbal or the attitude preset at the factory for the gimbal.

In some embodiments, when the arm assembly is in the first attitude, the user can directly mount the load device. In some other embodiments, the gimbal can automatically enter the first attitude after being powered on.

It should be noted that the first attitude can be the overall attitude of the arm assembly. The positions of the yaw arm, the pitch arm, and the roll arm can together determine the overall attitude of the arm assembly.

In this process, when the gimbal is in the unloaded mode, the arm assembly can stably maintain the first attitude instead of being in a free rotation state, which can facilitate the user to easily mount the load device or adjust the gimbal to an attitude suitable for mounting the load device.

In some embodiments, the first attitude may not always meet the user needs for mounting the load device. Differences in the load devices, such as different sizes, or differences in user habits can require the user to adjust the first attitude to meet the user mounting needs.

Therefore, after process S201, the control method of embodiments of the present disclosure further includes process S202, in response to a push-pull operation on the arm assembly, controlling at least one motor to cause the arm assembly to maintain the current attitude when the push-pull operation is removed from the arm assembly.

In some embodiments, when the gimbal is in the unloaded mode, and any one arm of the arm assembly is subjected to the push-pull operation, a current target joint angle can be obtained according to an actual joint angle of the motor corresponding to the arm. The actual joint angle can correspond to the position achieved by the push-pull operation. According to the current target joint angle, the motor of the arm can be controlled to maintain the arm assembly in the current attitude.

It can be understood that the current attitude is the attitude of the arm assembly when the push-pull operation is removed. In some embodiments, the current attitude can include the attitude of the arm assembly when the push-pull operation is removed and a nearby area of the attitude.

In some embodiments, the user can perform the push-pull operation on only one arm of the arm assembly each time according to actual needs. In some embodiments, the user can perform the push-pull operation on the yaw arm to control the yaw motor to drive the yaw arm to rotate, control the pitch motor to maintain the relative position of the pitch arm and the yaw arm unchanged, and control the roll motor to maintain the relative position of the roll arm and the pitch arm unchanged.

In some embodiments, the user can also perform the push-pull operations on at least two arms simultaneously according to actual needs. In some embodiments, the user can perform the push-pull operations on the yaw arm and the pitch arm simultaneously to control the yaw motor to drive the yaw arm to rotate and the pitch motor to drive the pitch arm to rotate, and control the roll motor to maintain the relative positions of the roll arm with the yaw arm and the pitch arm unchanged.

It should be understood that when the user needs to perform the push-pull operations on the at least two arms. The user can also perform the push-pull operation on only one arm each time. After completing one push-pull operation, the user can perform the push-pull operation on another arm to achieve the push-pull operations on at least two arms.

Through this process, the user can adjust the attitude of the arm assembly in the unloaded mode according to user intentions. Once adjusted, the arm assembly can maintain the current attitude, and the user can mount the load device onto the arm assembly without holding the arm assembly.

In some embodiments, after mounting the load device onto the arm assembly, the load device may not be in the optimal position for shooting. The user may still need to adjust the arm assembly having the load device.

Therefore, in some other embodiments, the gimbal control method can further include process S203: in response to the load device being mounted to the arm assembly, controlling at least one motor to output torque to cause the arm assembly to be in the second attitude. When the arm assembly is in the second attitude, an optical axis of a lens of the load device can be parallel to the horizontal plane, and the operating surface of the load device can face the user. Through the process, after the load device is mounted on the arm assembly, the gimbal can automatically adjust the load device to a position ready for shooting to facilitate the user to subsequently perform the shooting operations.

For example, the load device can be a mobile phone. In some embodiments, in response to the operation of mounting the mobile phone onto the arm assembly, the pitch motor can be controlled to output torque to cause the mobile phone to be perpendicular to the horizontal plane with the optical axis of the lens of the mobile phone being parallel to the horizontal plane. The yaw motor can be driven to cause the mobile phone screen and the operation area of the gimbal support assembly to face the same orientation. The orientation faced by the operation area of the support assembly fan can be the orientation of the user by default. Thus, the mobile phone screen can face the user to allow the user to operate the mobile phone mounted on the arm assembly conveniently.

In some embodiments, when the arm assembly is in the second attitude, the gimbal can be controlled to enter a stabilization mode to allow the arm assembly to stabilize the load device. Thus, the user can take clear photos or videos with stable pictures.

Usually, to facilitate real-time viewing of shooting effects and control of the gimbal, an application controlling the gimbal can be installed on the load device. The communication connection between the load device and the gimbal can be established in the application. After the load device is mounted at the gimbal, the user may need to manually open the corresponding application to control the gimbal through the load device. The shooting preparation process can be cumbersome.

To solve the technical problem, a first aspect of the present disclosure also provides another gimbal control method to simplify the user shooting preparation process.

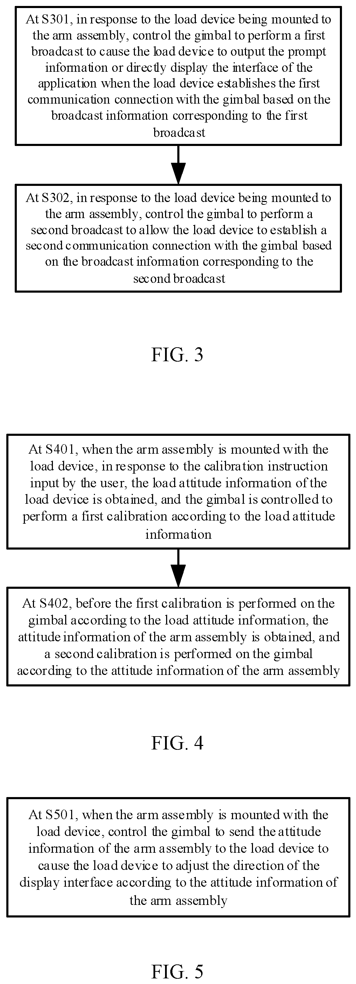

FIG. 3 is a schematic flowchart of another gimbal control method according to some embodiments of the present disclosure.

Referring to FIG. 3, embodiments of the present disclosure provide a gimbal control method. The gimbal can include an arm assembly. The arm assembly can be configured to carrier the load device, including at least one arm and a motor for controlling the rotation of the arm.

In some embodiments, the gimbal control method includes the following processes.

At S301, in response to the load device being mounted to the arm assembly, the gimbal is controlled to perform a first broadcast to cause the load device to output the prompt information or directly display the interface of the application when the load device establishes the first communication connection with the gimbal based on the broadcast information corresponding to the first broadcast.

In some embodiments, the application can be installed on the load device to obtain instructions for controlling the gimbal. The prompt information can be used to prompt the user whether to open the interface of the application.

Through the process, after the user mounts the load device onto the gimbal, the load device can automatically open the corresponding application to simplify the preparation process of the user before the shooting, which improves the user experience of using the gimbal.

In some embodiments, the first broadcast can be a Bluetooth Low Energy (BLE), and the first communication connection can be a Bluetooth Low Energy (BLE) connection.

In some embodiments, the broadcast information corresponding to the first broadcast can include the identity information of the gimbal. After receiving the first broadcast, the load device can identify the identity information to recognize the gimbal and establish the first communication connection with the gimbal.

In some embodiments, due to other limitations such as bandwidth, the first communication connection may not be suitable for sending instructions or transmitting data. Other communication connections may need to be established between the load device and the gimbal to facilitate the user to better achieve the interface between the gimbal and the load.

Therefore, in some embodiments, after process S301, the method further includes process S302. At S302, in response to the load device being mounted to the arm assembly, controlling the gimbal to perform a second broadcast to allow the load device to establish a second communication connection with the gimbal based on the broadcast information corresponding to the second broadcast. The first communication connection can be different from the second communication connection.

In some embodiments, the second communication connection can be used to transmit instructions for controlling the gimbal that is input by the user on the load device, such as instructions for switching gimbal modes, and instructions for controlling the gimbal to perform calibration. Alternatively, the second communication connection can also be used to transmit instructions for controlling the load device that is input by the user on the gimbal, such as instructions for zooming the phone, and instructions for controlling the mobile phone to perform shooting.

In some embodiments, when the first communication connection is a Bluetooth Low Energy (BLE) connection, the second communication connection can be a Classic Bluetooth connection.

Usually, environmental factors or human errors may cause the gimbal to tilt or drift. Thus, when the load device is mounted on the arm assembly of the gimbal, the load device cannot be maintained at a specific attitude, such as a horizontal attitude (in this attitude, the profile of the load device being vertical or parallel to the horizontal plane). Therefore, the arm assembly needs to be calibrated to cause the load device to be in a specific attitude.

To solve the technical problem, the first aspect of the present disclosure also provides another gimbal control method to better assist in gimbal calibration.

FIG. 4 is a schematic flowchart of another gimbal control method according to some embodiments of the present disclosure.

Referring to FIG. 4, embodiments of the present disclosure provide a gimbal control method. The gimbal includes an arm assembly. The arm assembly can be configured to carry a load device, including at least one arm and a motor that controls the rotation of the arm.

In some embodiments, the gimbal control method includes the following processes.

At S401, when the arm assembly is mounted with the load device, in response to the calibration instruction input by the user, the load attitude information of the load device is obtained, and the gimbal is controlled to perform a first calibration according to the load attitude information.

In some embodiments, the load attitude information can be detected by an Inertial Measurement Unit (IMU) arranged at the load device. In some embodiments, the load device can be a mobile phone provided with a gyroscope. The mobile phone can obtain the attitude information of the mobile phone and send the attitude information to the gimbal. In some other embodiments, the mobile phone can be provided with an accelerometer. The mobile phone can obtain the attitude information of the phone and send the attitude information to the gimbal.

Through this process, the gimbal can perform the calibration on the gimbal by directly using the attitude information of the load device to solve the problem of the gimbal being unable to be accurately calibrated solely according to the attitude information of the gimbal.

In some embodiments, in the first calibration, the attitude of the arm assembly can be adjusted to cause the center of gravity of the mobile phone and the center of the roll motor to be on the same horizontal plane.

In some other embodiments, in the first calibration, the attitude of the arm assembly can be adjusted to cause the center of gravity of the mobile phone and the center of the roll motor to be on the same plane perpendicular to the horizontal plane.

In some embodiments, a delay can exist for the gimbal to obtain the load attitude information of the load device. Controlling the gimbal to perform the calibration according to the load attitude information takes a long time and is inefficient. Therefore, in some embodiments, the method can include process S402 before process S401. At S402, before the first calibration is performed on the gimbal according to the load attitude information, the attitude information of the arm assembly is obtained, and a second calibration is performed on the gimbal according to the attitude information of the arm assembly. The process can improve the calibration accuracy while reducing the calibration time to improve the user operation experience.

In some embodiments, the second calibration can be used to adjust the attitude of the arm assembly within a larger range, while the first calibration can be used to adjust the attitude within a smaller range. The rotation amplitude of the arm assembly during the second calibration can be greater than the rotation amplitude of the arm assembly during the first calibration.

Usually, the load device such as the mobile phone can have its own IMU. The load device can adjust the direction of the display interface of the load device according to the attitude information detected by its own IMU. However, in some embodiments, the load device such as the mobile phone may fail to obtain the gyroscope information due to hardware damage, which can cause the mobile phone to rotate with the gimbal when the gimbal is used. However, the direction of the display interface cannot change accordingly, which affects the user experience in using the gimbal.

To solve the technical problem, the first aspect of the present disclosure provides another gimbal control method to adjust the direction of the display interface of the load device according to the attitude information of the arm assembly when the load device cannot obtain its own attitude information.

FIG. 5 is a schematic flowchart of another gimbal control method according to some embodiments of the present disclosure.

Referring to FIG. 5, embodiments of the present disclosure provide a gimbal control method. The gimbal includes an arm assembly. The arm assembly can be configured to carry a load device. The arm assembly can be combined with the load device, which includes at least one arm and a motor controlling the rotation of the arm.

In some embodiments, the gimbal control method includes the following processes.

At S501, when the arm assembly is mounted with the load device, the gimbal is controlled to send the attitude information of the arm assembly to the load device to cause the load device to adjust the direction of the display interface according to the attitude information of the arm assembly.

In this process, the direction of the display interface can still be adjusted according to the attitude information of the arm assembly of the external gimbal when the gyroscope fails, which improves the user experience during the application of the gimbal.

In some embodiments, the gimbal can be controlled to obtain joint angle information of the arm motor and send the joint angle information of the arm motor to the mobile phone. After receiving the joint angle information, the mobile phone can adjust the direction of the display interface according to the joint angle information. If the attitude information of the arm assembly belongs to the first attitude range, the attitude information of the arm can be sent to cause the mobile phone to display the interface in the first direction. If the attitude information of the arm assembly belongs to the second attitude range, the attitude information of the arm can be sent to cause the mobile phone to display the interface in the second direction.

It is understood that the first direction and the second direction can have different orientations. In some embodiments, the first direction can be horizontal, and the second direction can be vertical. In some other embodiments, the first direction can be vertical, and the second direction can be horizontal.

In some embodiments, the gimbal can be controlled to obtain the j oint angle information of the roll motor and send the joint angle information of the roll motor to the mobile phone. If the joint angle of the roll motor belongs to the first attitude range, the direction of the display interface of the mobile phone can be adjusted to be vertical. If the joint angle of the roll motor belongs to the second attitude range, the direction of the display interface of the mobile phone can be adjusted to be horizontal. In some other embodiments, if the joint angle of the roll motor belongs to the first attitude range, the direction of the display interface of the mobile phone can be adjusted to be horizontal. If the joint angle of the roll motor belongs to the second attitude range, the direction of the display interface of the mobile phone can be adjusted to be vertical.

In some embodiments, when the user operates incorrectly during the shooting stabilization process using the gimbal, the support assembly of the gimbal can be caused to be in suspension. In the suspension state, the support assembly of the gimbal can swing to damage the gimbal.

Thus, the first aspect of the present disclosure also provides a gimbal control method to prevent damage to the gimbal due to the suspension of the support assembly during stabilization.

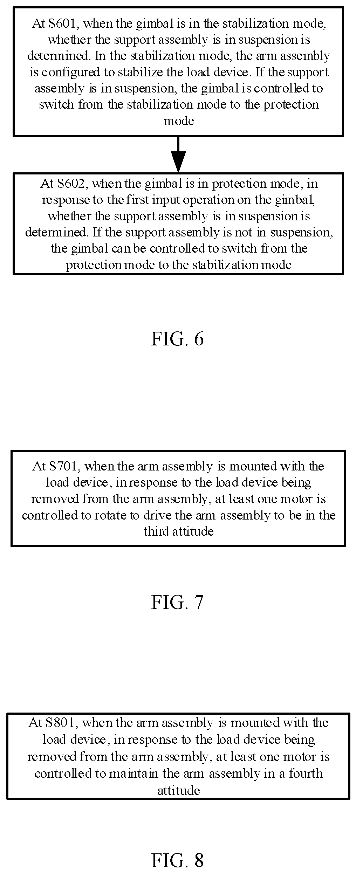

FIG. 6 is a schematic flowchart of another gimbal control method according to some embodiments of the present disclosure.

Referring to FIG. 6, embodiments of the present disclosure provide a gimbal control method. The gimbal includes an arm assembly. The arm assembly can be configured to carry a load device. The arm assembly can be combined with the load device, which includes at least one arm and a motor controlling the rotation of the arm.

In some embodiments, the gimbal control method includes the following processes.

At S601, when the gimbal is in the stabilization mode, whether the support assembly is in suspension is determined. In the stabilization mode, the arm assembly is configured to stabilize the load device. If the support assembly is in suspension, the gimbal is controlled to switch from the stabilization mode to the protection mode. In the protection model, at least one motor stops outputting torque.

With this process, the support assembly can be prevented from swinging irregularly due to suspension during the stabilization process. The application convenience can be improved for the user, and the gimbal can be prevented from being damaged due to the irregular swing of the support assembly.

In some embodiments, the support assembly being in suspension can include the support assembly being not held or fixed.

In some embodiments, whether the support assembly is in suspension can be determined in different methods. In some embodiments, the yaw motor connected to the support assembly can be controlled to continuously output torque. When the gyroscope arranged at the support assembly detects that the support assembly swings irregularly, the support assembly can be determined to be in suspension.

In some embodiments, if the support assembly is in suspension, the gimbal can be controlled to switch from the stabilization mode to the protection mode. The motor can stop outputting torque in the protection mode.

In some embodiments, when the gimbal is in the protection mode, the user needs to hold or fix the support assembly again before performing subsequent operations. Therefore, in some embodiments, the method also includes process S602 after process S601. At S602, when the gimbal is in protection mode, in response to the first input operation on the gimbal, whether the support assembly is in suspension is determined. If the support assembly is not in suspension, the gimbal can be controlled to switch from the protection mode to the stabilization mode.

In some embodiments, the first input operation can be an operation input by the user on the gimbal. The user can input related operations through buttons, joysticks, or dials arranged at the support assembly. In response to the user input operation, the gimbal can perform the suspension detection on the support assembly.

In some embodiments, the first input operation can be any operation that indirectly triggers the gimbal to perform the suspension detection, such as an operation of controlling the roll arm to rotate, an operation of controlling the pitch arm to rotate, or an operation of controlling the yaw arm to rotate. After the input operation is received, the gimbal can be first controlled to perform the suspension detection. When the support assembly is detected to be in suspension , the gimbal can be controlled to switch to the unloaded mode, and then the gimbal can perform specific operations such as the rotation of the roll arm, the rotation of the pitch arm, or the rotation of the yaw arm.

Of course, the first input operation can also be an operation of directly instructing the gimbal to perform the suspension detection. After the user input operation is received, the gimbal can perform the suspension detection on the support assembly. When the support assembly is detected to be not in suspension, the gimbal can be controlled to switch to the stabilization mode to wait for the user to subsequently input other operations.

In some embodiments, the user may need to re-mount the load device onto the arm assembly of the gimbal after removing the load device such as the mobile phone from the arm assembly and performing other operations.

Thus, the first aspect of the present disclosure also provides another gimbal control method, which includes controlling the attitude of the gimbal after removing the mobile phone to facilitate the user to continue to perform subsequent operations.

FIG. 7 is a schematic flowchart of another gimbal control method according to some embodiments of the present disclosure.

Referring to FIG. 7, embodiments of the present disclosure provide a gimbal control method. The gimbal includes an arm assembly. The arm assembly is configured to carry the load device, including at least one arm and a motor controlling the rotation of the arm.

In some embodiments, the gimbal control method includes the following processes.

At S701, when the arm assembly is mounted with the load device, in response to the load device being removed from the arm assembly, at least one motor is controlled to rotate to drive the arm assembly to be in the third attitude.

In some embodiments, the third attitude can be an attitude of the arm assembly in the unloaded mode. If the mobile phone is mounted on the arm assembly in the third attitude, the operating surface of the mobile phone can face the user.

In some embodiments, when the arm assembly is in any attitude, and after the user removes the mobile phone from the arm assembly, the gimbal motor can be controlled to output torque to drive the gimbal arm to rotate to cause the attitude of the arm assembly when the mobile phone is removed to switch to the third attitude.

In some embodiments, when the user removes the load device from the gimbal, the user may still need to continue to shoot using the gimbal under the original attitude of the gimbal. Then, the first aspect of the present disclosure also provides another gimbal control method to maintain the gimbal under the attitude when the load is removed to facilitate the user to continue to perform subsequent operations.

FIG. 8 is a schematic flowchart of another gimbal control method according to some embodiments of the present disclosure.

Referring to FIG. 8, embodiments of the present disclosure provide a gimbal control method. The gimbal includes an arm assembly. The arm assembly is configured to carry a load device, including at least one arm and a motor that controls the rotation of the arm.

In some embodiments, the gimbal control method includes the following processes.

At S801, when the arm assembly is mounted with the load device, in response to the load device being removed from the arm assembly, at least one motor is controlled to maintain the arm assembly in a fourth attitude.

In some embodiments, the fourth attitude can be the attitude of the arm assembly when the load device is separated from the arm assembly. In some embodiments, the gimbal can record the joint angle of the motor when the mobile phone is removed from the arm assembly and control the motor to output torque to maintain the current joint angle.

Usually, the load device can be mounted on the arm assembly of the gimbal through some adapters or load mounting members. To avoid negative impacts on the gimbal when the load mounting members are mounted on the gimbal without being combined with the load device, in some embodiments, detection may need to be performed on the situation when the load mounting member is mounted on the gimbal without being combined with the load device, and the gimbal under this situation can be protected.

Therefore, the first aspect of the present disclosure also provides another gimbal control method to detect whether the load mounting member is combined with the load device.

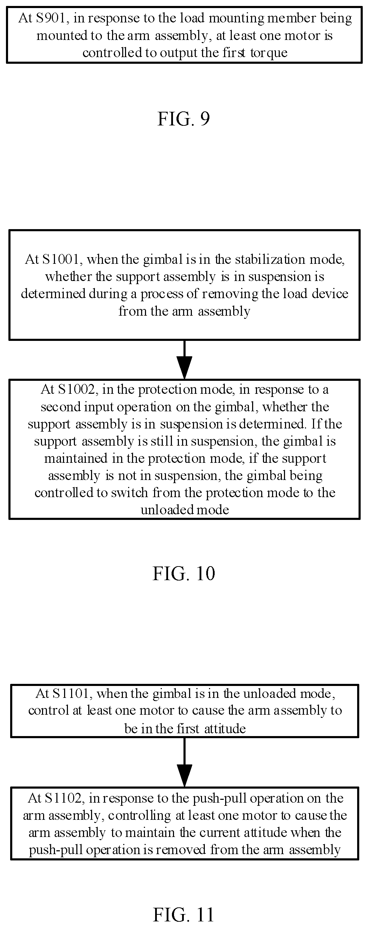

FIG. 9 is a schematic flowchart of another gimbal control method according to some embodiments of the present disclosure. In some embodiments, the gimbal control includes the following processes.

At S901, in response to the load mounting member being mounted to the arm assembly, at least one motor is controlled to output the first torque. The load mounting member can be combined with the arm assembly and the load device. If the load mounting member rotates, the gimbal is controlled to enter a protection mode. If the load mounting member does not rotate, the gimbal is controlled to enter a stabilization mode.

The first torque can be equal to or slightly greater than the minimum torque required to drive the load mounting member to rotate. In some embodiments, when the load device is mounted on the load mounting member, while the load mounting member is combined with the arm assembly, applying the first torque to the load mounting member may be insufficient to cause the load mounting member to rotate. Thus, the load mounting member being mounted with the load device can be determined when the joint angle of the motor does not change.

Through this process, the gimbal can detect whether the load mounting member is combined with the load device while being combined with the arm assembly to select the operation mode of the gimbal according to the actual mounting situation of the load device.

Usually, during a process of the user removing the load device from the arm assembly, the gimbal support assembly can be inevitably caused to be in suspension. In the suspension state, the gimbal support assembly can swing to potentially damage the gimbal.

Thus, the first aspect of the present disclosure provides another gimbal control method to prevent damage to the gimbal during the removal of the load device.

FIG. 10 is a schematic flowchart of another gimbal control method according to some embodiments of the present disclosure. In some embodiments, the gimbal control method includes the following processes.

At S 1001, when the gimbal is in the stabilization mode, whether the support assembly is in suspension is determined during a process of removing the load device from the arm assembly.

In some embodiments, whether the support assembly is in suspension can be detected in different methods. In some embodiments, the yaw motor connected to the support assembly can be controlled to continuously output torque. When the gyroscope arranged at the support assembly detects that the support assembly swings irregularly, the support assembly can be determined to be in suspension.

In some embodiments, if the support assembly is in suspension, the gimbal can be controlled to switch from the stabilization mode to the protection mode. In the protection mode, the motor can stop outputting torque.

In some embodiments, after removing the load device from the gimbal, the user can re-hold the support assembly. Then, the structure of the gimbal may not be damaged when operations are performed on the gimbal. The gimbal can be restored to the normal unloaded mode through operations.

Therefore, in some embodiments, the method further includes process S 1002 after process S1001. At S1002, in the protection mode, in response to a second input operation on the gimbal, whether the support assembly is in suspension is determined. If the support assembly is still in suspension, the gimbal is maintained in the protection mode. If the support assembly is not in suspension, the gimbal is controlled to switch from the protection mode to the unloaded mode.

In some embodiments, the second input operation can be an operation input by the user on the gimbal. The user can input related operations through buttons, joysticks, or dials on the support assembly. In response to the input operation of the user, the gimbal can perform suspension detection on the support assembly.

In some embodiments, the second input operation can be any operation that indirectly triggers the gimbal to perform the suspension detection, such as an operation of controlling the roll arm to rotate, an operation of controlling the pitch arm to rotate, or an operation of controlling the yaw arm to rotate. After receiving the input operation, the gimbal can be first controlled to perform the suspension detection. When the support assembly is determined to not be in suspension, the gimbal can be controlled to switch to the unloaded mode. Then, specific operations of rotating the roll arm, pitch arm, or yaw arm can be performed subsequently.

Of course, the second input operation can also be an operation of directly instructing the gimbal to perform the suspension detection. After receiving the operation input by the user, the gimbal can perform the suspension detection on the support assembly. After the support assembly is detected to not be in suspension, the gimbal can be controlled to switch to the unloaded mode to wait for the user to subsequently input other operations.

A second aspect of the present disclosure provides a control method for a gimbal system (i.e., a gimbal system control method).

Referring to FIG. 11, embodiments of the present disclosure provide a control method for a gimbal system. The gimbal system includes a gimbal and a load device. The gimbal includes an arm assembly. The arm assembly can be configured to carry the load device and include at least one arm and a motor for controlling the rotation of the arm.

In some embodiments, the control method for the gimbal system includes the following processes.

At S1101, when the gimbal is in the unloaded mode, at least one motor is controlled to cause the arm assembly to be in the first attitude.

It is easy to understand that in the unloaded mode, the arm assembly does not carry the load device. In some methods, the gimbal can automatically recognize whether the gimbal is in the unloaded mode. In some embodiments, a detection apparatus can be configured to detect whether the arm assembly is mounted with the load device. For example, the detection apparatus can be arranged at the arm assembly to detect the mounting situation of the load device. The detection apparatus can include an infrared sensor, a micro switch, or a Hall sensor. In some other embodiments, whether the load device is mounted on the arm assembly can be detected by driving the motor. In some embodiments, any one arm motor can be controlled to output torque, and the torque can be equal to the minimum torque capable of causing the arm to rotate, and the rotation situation of the arm can be recorded. If the arm rotates, the gimbal can be determined to be in the state with no load device mounted.

The first attitude can be the attitude of the arm assembly set by the user for the gimbal or the attitude preset at the factory.

In some embodiments, when the arm assembly is in the first attitude, the user can directly mount the load device. In some other embodiments, the gimbal can automatically enter the first attitude after being powered on.

It should be noted that the first attitude can be the overall attitude of the arm assembly. The positions of the yaw arm, the pitch arm, and the roll arm can together determine the overall attitude of the arm assembly.

In this process, when the gimbal is in the unloaded mode, the arm assembly can stably maintain the first attitude instead of being in the free rotation state, which facilitates the user to easily mount the load device or adjust the arm assembly to an attitude suitable for mounting the load device.

In some embodiments, the first attitude may not always meet the user needs for mounting the load device. Differences in load devices, such as different sizes of the load devices, or user habits may require the user to adjust the first attitude to meet the mounting needs of the user.

Therefore, after process S1101, the control method of embodiments of the present disclosure further includes process S1102, in response to the push-pull operation on the arm assembly, controlling at least one motor to cause the arm assembly to maintain the current attitude when the push-pull operation is removed from the arm assembly.

In some embodiments, when the gimbal is in the unloaded mode, and any arm of the arm assembly is subjected to a push-pull operation, the current target joint angle can be obtained according to the actual joint angle of the motor corresponding to the arm. The actual joint angle can correspond to the position reached by the push-pull operation. According to the current target joint angle, the motor of the arm can be controlled to maintain the arm assembly in the current attitude.

It can be understood that the current attitude can be the attitude of the arm assembly when the push-pull operation is removed. In some embodiments, the current attitude can include the attitude of the arm assembly when the push-pull operation is removed and the nearby area of the attitude.

In some embodiments, the user can perform the push-pull operation on only one arm of the arm assembly according to the actual needs. In some embodiments, the user can apply the push-pull operation to the yaw arm, control the yaw motor to drive the yaw arm to rotate, control the pitch motor to maintain the relative position between the pitch arm and the yaw arm unchanged, and control the roll motor to maintain the relative position between the roll arm and the pitch arm unchanged.

In some embodiments, the user can also perform push-pull operations on at least two arms simultaneously according to the actual needs. In some embodiments, the user can apply the push-pull operations to the yaw arm and the pitch arm simultaneously, control the yaw motor to drive the yaw arm to rotate and the pitch motor to drive the pitch arm to rotate, and control the roll motor to maintain the relative position between the roll arm and the yaw arm and the relative position between the roll arm and the pitch arm unchanged.

It should be understood that when the user needs to perform the push-pull operations on the at least two arms, the user can also perform a push-pull operation on only one arm each time. After the one push-pull operation is completed, the user can perform a push-pull operation on another arm to realize the push-pull operations on the at least two arms.

Through this process, the user can adjust the attitude of the arm assembly in the unloaded mode according to the intention of the user. After the arm assembly is adjusted, the arm assembly can maintain the current attitude. The user can mount the load device on the arm assembly without holding the arm assembly.

The second aspect of the present disclosure also provides another control method for the gimbal system, simplifying the user shooting preparation process.

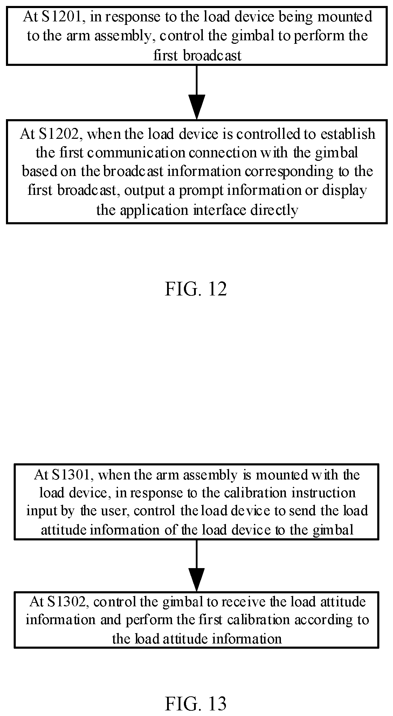

Referring to FIG. 12, embodiments of the present disclosure provide a control method for the gimbal system.

In some embodiments, the control method for the gimbal system includes the following processes.

At S1201, in response to the load device being mounted to the arm assembly, the gimbal is controlled to perform the first broadcast.

At S 1202, when the load device is controlled to establish the first communication connection with the gimbal based on the broadcast information corresponding to the first broadcast, prompt information is output or the application interface is directly displayed.

In some embodiments, the application can be installed on the load device to obtain control instructions for controlling the gimbal. The prompt message can be used to prompt the user whether to open the interface of the application.

Through this process, after the user mounts the load device on the gimbal, the load device can automatically open the corresponding application, simplifying the preparation process for the user before shooting and improving the user experience when applying the gimbal.

In some embodiments, the first broadcast can be a Bluetooth Low Energy (BLE) broadcast, and the first communication connection can be a Bluetooth Low Energy (BLE) connection.

In some embodiments, the broadcast information corresponding to the first broadcast can include the identity information of the gimbal. After receiving the first broadcast, the load device identifies the identity information to recognize the gimbal and establish the first communication connection with the gimbal.

In some embodiments, due to bandwidth and other limitations, the first communication connection may not be suitable for sending instructions or transmitting data. Another communication connection may need to be established between the load device and the gimbal to facilitate the user to better realize the interaction between the gimbal and the load.

Therefore, in some embodiments, the method further includes process S1203 and process S1204 after S1201.

At S1203, in response to the load device being mounted to the arm assembly, the gimbal is controlled to perform the second broadcast.

At S1204, the load device is controlled to establish the second communication connection with the gimbal based on the broadcast information corresponding to the second broadcast. The first communication connection is different from the second communication connection.

In some embodiments, the second communication connection can be used to transmit the instructions for controlling the gimbal, such as the instruction for switching the gimbal mode, the instruction for controlling the gimbal to perform calibration. Alternatively, the second communication connection can also be used to transmit the instructions for controlling the load device input by the user on the gimbal, such as the instruction to control the mobile phone to zoom and the instruction to control the mobile phone to shoot.

In some embodiments, when the first communication connection is a Bluetooth Low Energy (BLE) connection, the second communication connection can be a Classic Bluetooth connection.

The second aspect of the present disclosure also provides another control method for a gimbal system to better assist in gimbal calibration.

Referring to FIG. 13, embodiments of the present disclosure provide a control method for a gimbal system.

In some embodiments, the gimbal system control method includes the following processes.

At S 1301, when the arm assembly is mounted with the load device, in response to the calibration instruction input by the user, the load device is controlled to send the load attitude information of the load device to the gimbal.

In some embodiments, the load attitude information can be detected by the Inertial Measurement Unit (IMU) arranged at the load device. In some embodiments, the load device can be the mobile phone. The mobile phone can be provided with a gyroscope. The mobile phone can obtain the attitude information of the mobile phone through the gyroscope and send the attitude information to the gimbal. In some other embodiments, the mobile phone can be provided with an accelerometer. The mobile phone can obtain the attitude information of the mobile phone through the accelerometer and send the attitude information to the gimbal.

At S 1302, the gimbal is controlled to receive the load attitude information and perform the first calibration according to the load attitude information.

Through these processes, the gimbal can perform calibration on the gimbal by directly using the attitude information of the load device, solving the problem of the gimbal being unable to accurately calibrate solely according to the attitude information of the gimbal.

In some embodiments, the first calibration can be used to adjust the attitude of the arm assembly to cause the center of gravity of the mobile phone and the center of the roll motor to be on the same horizontal plane.

In some other embodiments, the first calibration can be used to adjust the attitude of the arm assembly to cause the center of gravity of the mobile phone and the center of the roll motor to be on the same plane perpendicular to the horizontal plane.

In some embodiments, a delay may exist for the gimbal in obtaining the load attitude information of the load device. Controlling the gimbal to perform calibration according to the load attitude information can take a long time and can be inefficient.

Therefore, in some embodiments, the method can further include process S1303 before process S1301. At S1303, before performing the first calibration on the gimbal according to the load attitude information, the attitude information of the arm assembly is obtained, and the second calibration is performed on the gimbal according to the attitude information of the arm assembly.

With this process, the calibration accuracy can be ensured while the calibration time is reduced to improve the user operation experience.

In some embodiments, the second calibration can be used to adjust the attitude of the arm assembly within a relatively large range, while the first calibration can be used to adjust the attitude within a relatively small range. The rotation amplitude of the arm assembly in the second calibration can be greater than the rotation amplitude of the arm assembly in the first calibration.

The second aspect of the present disclosure provides another gimbal system control method to adjust the direction of the display interface of the load device according to the attitude information of the arm assembly when the load device cannot obtain the attitude information of the load device.

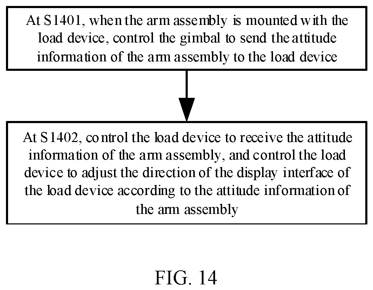

Referring to FIG. 14, embodiments of the present disclosure provide a gimbal system control method.

In some embodiments, the gimbal control method includes the following processes.

At S 1401, when the arm assembly is mounted with the load device, the gimbal is controlled to send the attitude information of the arm assembly to the load device.

At S 1402, the load device is controlled to receive the attitude information of the arm assembly, and the load device is controlled to adjust the direction of the display interface of the load device according to the attitude information of the arm assembly.

With the above process, the mobile phone can still adjust the direction of the display interface according to the attitude information of the arm assembly of the external gimbal when the gyroscope fails, which improves the user experience during the gimbal application for the user.

In some embodiments, the gimbal can be controlled to obtain the joint angle information of the arm motor and send the joint angle information of the arm motor to the mobile phone. After receiving the joint angle information, the mobile phone can adjust the direction of the display interface according to the joint angle information. If the attitude information of the arm assembly belongs to the first attitude range, the attitude information of the arm can be sent to cause the mobile phone to display the display interface in the first direction. If the attitude information of the arm assembly belongs to the second attitude range, the attitude information can be sent to cause the mobile phone to display the display interface in the second direction.

It can be understood that the first direction and the second direction are different. In some embodiments, the first direction can be horizontal, and the second direction can be vertical. In some other embodiments, the first direction can be vertical and the second direction can be horizontal.

In some embodiments, the gimbal can be controlled to obtain the joint angle information of the roll motor and send the joint angle information of the roll motor to the mobile phone. If the joint angle of the roll motor belongs to the first attitude range, the direction of the display interface of the mobile phone can be adjusted to be vertical. If the joint angle of the roll motor belongs to the second attitude range, the direction of the display interface of the mobile phone can be adjusted to horizontal. In some other embodiments, if the joint angle of the roll motor belongs to the first attitude range, the direction of the display interface of the mobile phone can be adjusted to horizontal. If the joint angle of the roll motor belongs to the second attitude range, the direction of the display interface of the mobile phone can be adjusted to vertical.

A third aspect of the present disclosure provides a gimbal, including an arm assembly configured to carry a load device. The arm assembly can include at least one arm and a motor that controls the rotation of the arm. The gimbal can further include a support assembly configured to support the arm assembly, a memory used to store computer programs, and a processor configured to run the computer programs stored in the memory to execute the gimbal control method described in the first aspect of the present disclosure.

Meanwhile, a fourth aspect of the present disclosure provides a gimbal system, including: a gimbal. The gimbal can include an arm assembly and a support assembly. The arm assembly can include at least one arm and a motor that controls the rotation of the arm. The support assembly can be configured to support the arm assembly. The gimbal system can further include a load device that can be mounted on the arm assembly, a memory used to store computer programs, and a processor configured to run the computer programs stored in the memory to execute the gimbal control method described in the second aspect of the present disclosure.

The above description is only specific embodiments of the present disclosure. However, the scope of the present disclosure is not limited to this. Those skilled in the art can easily think of various equivalent modifications or replacements within the technical scope disclosed in the present disclosure. These modifications or replacements can be covered within the protection scope of the present disclosure. Therefore, the protection scope of the present disclosure can be subject to the scope of the claims.

## Claims

1. A control method for a gimbal, the gimbal including an arm assembly, the arm assembly being configured to carry a load device, the arm assembly including at least one arm and a motor that controls rotation of the arm, comprising:
in response to the gimbal being in an unloaded mode, controlling at least one motor to cause the arm assembly to be in a first attitude; and
in response to a push-pull operation on the arm assembly, controlling at least one motor to maintain the arm assembly in the current attitude when the push-pull operation is removed from the arm assembly;
wherein the current attitude refers to an attitude of the arm assembly when the push-pull operation is removed from the arm assembly.

2. The method according to claim 1, further comprising:
in response to the load device being mounted to the arm assembly, controlling at least one motor to output torque to cause the arm assembly to be in a second attitude;
wherein, in response to the arm assembly being in the second attitude, an optical axis of a lens of the load device is parallel to a horizontal plane, and an operating surface of the load device faces a user.

3. The method according to claim 2, further comprising:
in response to the arm assembly being in the second attitude, controlling the gimbal to enter a stabilization mode to cause the arm assembly to stabilize the load device.

4. The method according to claim 1, further comprising:
in response to the load device being mounted to the arm assembly, controlling the gimbal to perform a first broadcast to cause the load device to output prompt information or directly display an interface of an application when establishing a first communication connection with the gimbal based on broadcast information corresponding to the first broadcast;
wherein the application is installed on the load device and is used to obtain a user instruction for controlling the gimbal, and the prompt information is used to prompt the user whether to open the interface of the application.

5. The method according to claim 4, wherein:
the broadcast information includes identity information of the gimbal to allow the load device to recognize the gimbal.

6. The method according to claim 4, further comprising:
in response to the load device being mounted to the arm assembly, controlling the gimbal to perform a second broadcast to allow the load device to establish a second communication connection with the gimbal based on broadcast information corresponding to the second broadcast, the first communication connection being different from the second communication connection;
wherein, the second communication connection is used to transmit an instruction of controlling the gimbal input on the load device or an instruction of controlling the load device input on the gimbal.

7. The method according to claim 1, further comprising:
in a case where the arm assembly is mounted with the load device, in response to a calibration instruction input by a user, obtaining load attitude information of the load device; and
controlling the gimbal to perform a first calibration according to the load attitude information, wherein the load attitude information is measured by a sensor arranged at the load device.

8. The method according to claim 7, further comprising, before performing the first calibration on the gimbal according to the load attitude information:
obtaining the attitude information of the arm assembly and performing a second calibration on the gimbal according to the attitude information of the arm assembly;
wherein rotation amplitude of the arm assembly during the second calibration is greater than rotation amplitude of the arm assembly during the first calibration.

9. The method according to claim 1, further comprising:
in a case where the arm assembly is mounted with the load device, controlling the gimbal to send the attitude information of the arm assembly to the load device to allow the load device to adjust a display interface direction of the load device according to the attitude information of the arm assembly.

10. The method according to claim 9, further comprising:
in response to the attitude information of the arm assembly belonging to a first attitude range, sending the attitude information of the arm to allow the load device to display a display interface in the first direction; and/or
in response to the attitude information of the arm assembly belonging to a second attitude range, using the attitude information of the arm to allow the load device to display the display interface in the second direction, wherein the first direction and the second direction are different.

11. The method according to claim 10, wherein:
the first direction is vertical, and the second direction is horizontal; or
the first direction is horizontal, and the second direction is vertical.

12. The method according to claim 1, further comprising, the gimbal including a support assembly, and the support assembly being configured to support the arm assembly:
in response to the gimbal being in a stabilization mode, determining whether the support assembly is in suspension, wherein in the stabilization mode, the arm assembly is configured to stabilize the load device; and
in response to the support assembly being in suspension , controlling the gimbal to switch from the stabilization mode to a protection mode, wherein in the protection mode, at least one motor stops outputting torque.

13. The method according to claim 12, further comprising:
in response to the gimbal being in the protection mode and a first input operation on the gimbal, determining whether the support assembly is in suspension; and
in response to the support assembly being in suspension , maintaining the gimbal in the protection mode.

14. The method according to claim 12 or 13, further comprising:
in response to the gimbal being in the protection mode, and the first input operation on the gimbal, determining whether the support assembly is in suspension; and
in response to the support assembly not being in suspension, controlling the gimbal to switch from the protection mode to the stabilization mode.

15. The method according to claim 1, further comprising:
in a case where the arm assembly is mounted with the load device, in response to the load device being removed from the arm assembly, controlling at least one motor to rotate to drive the arm assembly to be in a third attitude;
wherein, in response to the arm assembly being in the third attitude and the load device being mounted to the arm assembly, the operating surface of the load device faces a user.

16. The method according to claim 1, further comprising:
in a case where the arm assembly is mounted with the load device, in response to the load device being removed from the arm assembly, controlling at least one motor to cause the arm assembly to be in a fourth attitude;
wherein, the fourth attitude is an attitude of the arm assembly when the load device is separated from the arm assembly.

17. The method according to claim 1, further comprising, the gimbal being provided with a support assembly, and the support assembly being configured to support the arm assembly:
when the gimbal is in a stabilization mode, determining whether the support assembly is in suspension in a process of removing the load device from the arm assembly, wherein in the stabilization mode, the arm assembly is configured to stabilize the load device; and
in response to the support assembly being in suspension , controlling the gimbal to switch from the stabilization mode to a protection mode, wherein in the protection mode, the motor stops outputting torque.

18. The method according to claim 17, further comprising:
in the protection mode, in response to a second input operation on the gimbal, determining whether the support assembly is in suspension; and
in response to the support assembly still being in suspension, maintaining the gimbal in the protection mode.

19. The method according to claim 17, further comprising:
in the protection mode, in response to a second input operation on the gimbal, determining whether the support assembly is in suspension; and
in response to the support assembly not being in suspension, controlling the gimbal to switch from the protection mode to an unloaded mode.

20. The method according to claim 1, further comprising:
in response to a load mounting member being mounted to the arm assembly, determining a combination state of the load mounting member and the load device, wherein the load mounting member is combined with the arm assembly and the load device;
wherein:
in response to the load mounting member being not combined with the load device, the gimbal is controlled to switch to the protection mode, and in the protection mode, the motor stops outputting torque; and/or
in response to the load mounting member being combined with the load device, the gimbal is controlled to switch to the stabilization mode to cause the arm assembly to stabilize the load device.

21. The method according to claim 1, further comprising:
in response to the load mounting member being mounted to the arm assembly, controlling at least one motor to output first torque, wherein the load mounting member is combined with the arm assembly and the load device;
wherein:
in response to the load mounting member rotating, controlling the gimbal to enter the protection mode; and/or
in response to the load mounting member not rotating, controlling the gimbal to enter the stabilization mode.

22. The method according to claim 21, wherein:
the first torque is equal to a minimum torque required to drive the load mounting member to rotate.

23. A control method for a gimbal, the gimbal including an arm assembly configured to carry a load device, the arm assembly including at least one arm and a motor for controlling rotation of the arm, comprising:
in response to the load device being mounted to the arm assembly, controlling the gimbal to perform a first broadcast to cause the load device to output prompt information or directly display an interface of an application when establishing a first communication connection with the gimbal based on broadcast information corresponding to the first broadcast;
wherein the application is installed on the load device and is used to obtain an instruction for controlling the gimbal, and the prompt information is used to prompt a user whether to open the interface of the application.

24. The method according to claim 23, wherein:
the broadcast information includes identity information of the gimbal to allow the load device to recognize the gimbal.

25. The method according to claim 23, further comprising:
in response to the load device being mounted to the arm assembly, controlling the gimbal to perform a second broadcast to allow the load device to establish a second communication connection with the gimbal based on broadcast information corresponding to the second broadcast, the first communication connection being different from the second communication connection;
wherein, the second communication connection is used to transmit an instruction of controlling the gimbal input on the load device or an instruction of controlling the load device input on the gimbal.

26. A control method for a gimbal, the gimbal including an arm assembly configured to carry a load device, the arm assembly including at least one arm and a motor for controlling rotation of the arm, comprising:
in a case where the arm assembly is mounted with the load device, in response to a calibration instruction input by a user, obtaining load attitude information of the load device; and
controlling the gimbal to perform a first calibration according to the load attitude information, wherein the load attitude information is measured by a sensor arranged at the load device.

27. The method according to claim 26, further comprising, before performing the first calibration on the gimbal according to the load attitude information:
obtaining the attitude information of the arm assembly and performing a second calibration on the gimbal according to the attitude information of the arm assembly;
wherein rotation amplitude of the arm assembly during the second calibration is greater than rotation amplitude of the arm assembly during the first calibration.

28. A control method for a gimbal, the gimbal including an arm assembly configured to carry a load device, the arm assembly including at least one arm and a motor for controlling rotation of the arm, comprising:
in a case where the arm assembly is mounted with the load device, controlling the gimbal to send attitude information of the arm assembly to the load device to allow the load device to adjust a display interface direction of the load device according to the attitude information of the arm assembly.

29. The method according to claim 28, further comprising:
in response to the attitude information of the arm assembly belonging to a first attitude range, using the attitude information of the arm to allow the load device to display a display interface in a first direction; and/or
in response to the attitude information of the arm assembly belonging to a second attitude range, using the attitude information of the arm to allow the load device to display the display interface in a second direction, wherein the first direction and the second direction are different.

30. The method according to claim 29, wherein:
the first direction is vertical, and the second direction is horizontal; or
the first direction is horizontal, and the second direction is vertical.

31. A control method for a gimbal system, the gimbal system including a gimbal and a load device, the gimbal including an arm assembly, the arm assembly being configured to carry the load device, the arm assembly including at least one arm and a motor for controlling rotation of the arm, comprising:
in response to the gimbal being in an unloaded mode, controlling at least one motor to cause the arm assembly to be in a first attitude; and
in response to a push-pull operation on the arm assembly, controlling at least one motor to cause the arm assembly to maintain a current state when the push-pull operation being removed from the arm assembly;
wherein the current attitude is an attitude of the arm assembly when the push-pull operation is removed from the arm assembly.

32. The method according to claim 31, further comprising:
in response to the load device being mounted at the arm assembly, controlling at least one motor to output torque to cause the arm assembly to be in a second attitude;
wherein in response to the arm assembly being in the second attitude, an optical axis of a lens of the load device is parallel to a horizontal plane, and an operating surface of the load device faces a user.

33. The method according to claim 32, further comprising:
in response to the arm assembly being in the second attitude, controlling the gimbal to enter a stabilization mode to allow the arm assembly to stabilize the load device.

34. The method according to claim 31, further comprising:
in response to the load device being mounted to the arm assembly, controlling the gimbal to perform a first broadcast; and
controlling the load device to output prompt information or directly display an interface of an application when establishing a first communication connection with the gimbal based on broadcast information corresponding to the first broadcast;
wherein, the application is installed on the load device and is used to obtain an instruction of controlling the gimbal, and the prompt information is used to prompt the user whether to open the interface of the application.

35. The method according to claim 34, wherein:
the broadcast information includes identity information of the gimbal to allow the load device to recognize the gimbal.

36. The method according to claim 34, further comprising:
in response to the load device being mounted to the arm assembly, controlling the gimbal to perform a second broadcast;
controlling the load device to establish a second communication connection with the gimbal based on broadcast information corresponding to the second broadcast, the first communication connection being different from the second communication connection;
wherein, the second communication connection is used to transmit an instruction of controlling the gimbal input on the load device or an instruction of controlling the load device input on the gimbal.

37. The method according to claim 31, further comprising:
in a case where the arm assembly is mounted with the load device, in response to a calibration instruction input by a user, controlling the load device to send load attitude information of the load device to the gimbal, the load attitude information being detected by a sensor arranged at the load device; and
controlling the gimbal to receive the load attitude information, and controlling the gimbal to perform a first calibration according to the load attitude information.

38. The method according to claim 37, further comprising, before performing the first calibration on the gimbal according to the load attitude information:
controlling the gimbal to obtain the attitude information of the arm assembly and performing a second calibration on the gimbal according to the attitude information of the arm assembly;
wherein rotation amplitude of the arm assembly during the second calibration is greater than rotation amplitude of the arm assembly during the first calibration.

39. The method according to claim 31, further comprising:
in a case where the arm assembly is mounted with the load device, controlling the gimbal to send attitude information of the arm assembly to the load device;
controlling the load device to receive the attitude information of the arm assembly and controlling the load device to adjust a display interface direction of the load device according to the attitude information of the arm assembly.

40. The method according to claim 39, wherein:
in response to the attitude information of the arm assembly belonging to a first attitude range, the load device displays a display interface in a first direction; and/or
in response to the attitude information of the arm assembly belonging to a second attitude range, the load device displays the display interface in a second direction according to the attitude information of the arm assembly, wherein the first direction and the second direction are different.

41. The method according to claim 40, wherein:
the first direction is vertical, and the second direction is horizontal; or
the first direction is horizontal, and the second direction is vertical.

42. The method according to claim 39, further comprising, before controlling the load device to adjust the display interface direction of the load device according to the attitude information of the arm assembly:
controlling the load device to receive load attitude information of the load device;
in response to the load device being unable to obtain the load attitude information, controlling the load device to obtain attitude information of the arm assembly, and controlling the load device adjust the display interface direction of the load device according to the attitude information of the arm assembly; and/or
in response to the load device obtaining the load attitude information, controlling the load device to adjust the display interface direction of the load device according to the load attitude information.

43. The method according to claim 31, further comprising, the gimbal including a support assembly, and the support assembly being configured to support the arm assembly:
in response to the gimbal being in a stabilization mode, determining whether the support assembly is in suspension, wherein in the stabilization mode, the arm assembly is configured to stabilize the load device; and
in response to the support assembly being in suspension , controlling the gimbal to switch from the stabilization mode to a protection mode, wherein in the protection mode, at least one motor stops outputting torque.

44. The method according to claim 12, further comprising:
in response to the gimbal being in the protection mode and a first input operation on the gimbal, determining whether the support assembly is in suspension; and
in response to the support assembly still being in suspension, maintaining the gimbal in the protection mode.

45. The method according to claim 43 or 44, further comprising:
in response to the gimbal being in the protection mode, and the first input operation on the gimbal, determining whether the support assembly is in suspension; and
in response to the support assembly not being in suspension, controlling the gimbal to switch from the protection mode to the stabilization mode.

46. The method according to claim 31, further comprising:
in a case where the arm assembly is mounted with the load device, in response to the load device being removed from the arm assembly, controlling at least one motor to rotate to drive the arm assembly to be in a third attitude;
wherein, in response to the arm assembly being in the third attitude and the load device being mounted to the arm assembly, the operating surface of the load device faces a user.

47. The method according to claim 31, further comprising:
in a case where the arm assembly is mounted with the load device, in response to the load device being removed from the arm assembly, controlling at least one motor to cause the arm assembly to be in a fourth attitude;
wherein, the fourth attitude is an attitude of the arm assembly when the load device is separated from the arm assembly.

48. The method according to claim 31, further comprising, the gimbal being provided with a support assembly, and the support assembly being configured to support the arm assembly:
when the gimbal is in a stabilization mode, determining whether the support assembly is in suspension during a process of removing the load device from the arm assembly, wherein in the stabilization mode, the arm assembly is configured to stabilize the load device; and
in response to the support assembly being in suspension , controlling the gimbal to switch from the stabilization mode to a protection mode, wherein in the protection mode, the motor stops outputting torque.

49. The method according to claim 48, further comprising:
in the protection mode, in response to a second input operation on the gimbal, determining whether the support assembly is in suspension; and
in response to the support assembly still being in suspension, maintaining the gimbal in the protection mode.

50. The method according to claim 48, further comprising:
in the protection mode, in response to a second input operation on the gimbal, determining whether the support assembly is in suspension; and
in response to the support assembly not being in suspension, controlling the gimbal to switch from the protection mode to an unloaded mode.

51. The method according to claim 31, further comprising:
in response to a load mounting member being mounted to the arm assembly, determining a combination state of the load mounting member and the load device, wherein the load mounting member is combined with the arm assembly and the load device;
wherein:
in response to the load mounting member being not combined with the load device, the gimbal is controlled to switch to the protection mode, and in the protection mode, the motor stops outputting torque; and/or
in response to the load mounting member being combined with the load device, the gimbal is controlled to switch to the stabilization mode to cause the arm assembly to stabilize the load device.

52. The method according to claim 31, further comprising:
in response to the load mounting member being mounted to the arm assembly, controlling at least one motor to output first torque, wherein the load mounting member is combined with the arm assembly and the load device;
wherein:
in response to the load mounting member rotating, controlling the gimbal to enter the protection mode; and/or
in response to the load mounting member not rotating, controlling the gimbal to enter the stabilization mode.

53. The method according to claim 52, wherein:
the first torque is equal to a minimum torque required to drive the load mounting member to rotate.

54. A control method for a gimbal system, the gimbal system including a gimbal and a load device, the gimbal including an arm assembly, the arm assembly being configured to carry the load device, the arm assembly including at least one arm and a motor for controlling rotation of the arm, comprising:
in response to the load device being mounted to the arm assembly, controlling the gimbal to perform a first broadcast;
controlling the load device to output prompt information or directly display an interface of an application when establishing a first communication connection with the gimbal based on broadcast information corresponding to the first broadcast;
wherein the application is installed on the load device and is used to obtain a user instruction for controlling the gimbal, and the prompt information is used to prompt the user whether to open the interface of the application.

55. The method according to claim 54, wherein:
the broadcast information includes identity information of the gimbal, and the load device recognizes the gimbal based on the broadcast information.

56. The method according to claim 54, further comprising:
in response to the load device being mounted to the arm assembly, controlling the gimbal to perform a second broadcast;
controlling the load device to establish a second communication connection with the gimbal based on broadcast information corresponding to the second broadcast, the first communication connection being different from the second communication connection;
wherein, the second communication connection is used to transmit an instruction of controlling the gimbal input on the load device or an instruction of controlling the load device input on the gimbal.

57. A control method for a gimbal system, the gimbal system including a gimbal and a load device, the gimbal including an arm assembly, the arm assembly being configured to carry the load device, the arm assembly including at least one arm and a motor for controlling rotation of the arm, comprising:
in a case where the arm assembly is mounted with the load device, in response to a calibration instruction input by a user, controlling the load device to send load attitude information of the load device to the gimbal, the load attitude information being detected by a sensor arranged at the load device; and
controlling the gimbal to receive the load attitude information and to perform a first calibration according to the load attitude information.

58. The method according to claim 57, further comprising, before performing the first calibration on the gimbal according to the load attitude information:
controlling the gimbal to obtain the attitude information of the arm assembly and performing a second calibration on the gimbal according to the attitude information of the arm assembly;
wherein rotation amplitude of the arm assembly during the second calibration is greater than rotation amplitude of the arm assembly during the first calibration.

59. A control method for a gimbal system, the gimbal system including a gimbal and a load device, the gimbal including an arm assembly, the arm assembly being configured to carry the load device, the arm assembly including at least one arm and a motor for controlling rotation of the arm, comprising:
in a case where the arm assembly is mounted with the load device, controlling the gimbal to send attitude information of the arm assembly to the load device; and
controlling the load device to receive the attitude information of the arm assembly, and controlling the load device to adjust a display interface direction of the load device according to the attitude information of the arm assembly.

60. The method according to claim 59, wherein:
in response to the attitude information of the arm assembly belonging to a first attitude range, the load device displays a display interface in a first direction according to the attitude information of the arm assembly; and/or
in response to the attitude information of the arm assembly belonging to a second attitude range, the load device displays the display interface in a second direction according to the attitude information of the arm assembly, wherein the first direction and the second direction face differently.

61. The method according to claim 60, wherein:
the first direction is vertical, and the second direction is horizontal; or
the first direction is horizontal, and the second direction is vertical.

62. The method according to claim 59, further comprising:
controlling the load device to obtain the load attitude information of the load device before controlling the load device to adjust the display interface direction of the load device according to the attitude information of the arm assembly;
in response to the load device being unable to obtain the load attitude information, controlling the load device to obtain attitude information of the arm assembly, and controlling the load device adjust the display interface direction of the load device according to the attitude information of the arm assembly; and/or
in response to the load device obtaining the load attitude information, controlling the load device to adjust the display interface direction of the load device according to the load attitude information.

63. A gimbal comprising:
an arm assembly, the arm assembly being configured to carry a load device, and the arm assembly including at least one arm and a motor that controls rotation of the arm;
a support assembly, the support assembly being configured to support the arm assembly;
one or more memories, the one or more memories being used to store a computer program; and
one or more processors, the one or more processors being configured to run the computer program stored in the one or more memories to perform the control method of any one of claim 1 to 30.

64. A gimbal system comprising:
a gimbal, the gimbal including an arm assembly and a support assembly, the arm assembly including at least one arm and a motor that controls rotation of the motor, the support assembly being configured to support the arm assembly;
a load device, the load device is carried by the arm assembly;
one or more memories, the one or more memories being used to store a computer program; and
one or more processors, the one or more processors being configured to run the computer program stored in the one or more memories to execute the control method of any one of claims 31 to 62.
